# EUROPÄISCHE PATENTSCHRIFT

(11) **EP 0 650 867 B1**
(45) Veröffentlichungstag und Bekanntmachung des Hinweises auf die Patenterteilung: **21.07.1999**
(21) Anmeldenummer: 94115851.1
(22) Anmeldetag: 07.10.1994
(51) Int. Cl.: B60R 16/02, B60R 25/10

(54) **Schaltanordnung zur Reduzierung des Ruhestromverbrauchs bei abgestellten Kraftfahrzeugen**
Switching arrangement for reducing the static current consumption in a parked motor vehicle
Circuit de commutation pour réduire la consommation de courant dans un véhicule automobile en stationnement

(30) Priorität: 02.11.1993 DE 4337274
(43) Veröffentlichungstag der Anmeldung: 03.05.1995
(73) Patentinhaber: Bayerische Motoren Werke Aktiengesellschaft, 80788 München (DE)
(72) Erfinder: Westermeir, Gerhard, D-85599 Parsdorf (DE); Busch, Reinhard, D-82057 Icking (DE); Leupolz, Johann, D-86854 Amberg (DE)

(56) Entgegenhaltungen:
- EP-A- 0 225 492
- WO-A-90/02670

## Beschreibung

Die Erfindung bezieht sich auf eine Schaltanordnung zur Reduzierung des Ruhestromverbrauchs bei abgestellten Kraftfahrzeugen nach dem Oberbegriff des Patentanspruchs 1.

Eine derartige Schaltanordnung ist beispielsweise aus der WO 90/02670 bekannt. In der WO 90/02670 ist ein Kraftfahrzeug mit einer Schaltanordnung zur Reduzierung des Ruhestromverbrauchs bei abgestelltem Kraftfahrzeug mittels eines steuerbaren Schalters zur zentralen Trennung der Bordnetzverbraucher von der Kraftfahrzeugbatterie beschrieben. Ferner geht aus der WO 90/02670 hervor, daß der Versorgungseingang einer elektrischen Diebstahlschutzvorrichtung unter Umgehung des steuerbaren Schalters mit der Kraftfahrzeugbatterie untrennbar verbunden ist. Eine genauere Beziehung zwischen der Ein- und Ausschaltlogik der Diebstahlschutzvorrichtung und der Einund Ausschaltlogik des steuerbaren Schalters geht aus dieser Druckschrift nicht hervor, so daß eine weitere Optimierung der Reduzierung des Ruhestromverbrauchs nicht möglich ist.

Darüber hinaus ist eine Schaltanordnung zur Reduzierung des Ruhestromverbrauchs bei abgestellten Kraftfahrzeugen auch aus der DE 37 42 312 A1 bekannt. Bei dieser bekannten Schaltanordnung werden sämtliche Verbraucher abgeschaltet, wenn bei abgezogenem Zündschlüssel die Fahrzeugbatteriespannung einen unteren Grenzwert unterschreitet. Aus der DE 40 40 405 A1 ist eine weitere Schaltanordnung zur Reduzierung des Ruhestromverbrauchs bei abgestellten Kraftfahrzeugen bekannt, bei der durch jeden Verriegelungsvorgang einer Kraftfahrzeugtur ebenfalls sämtlicher Verbraucher von der Kraftfahrzeugbatterie getrennt werden. Bei diesen Schaltanordnungen werden sämtliche Verbraucher und damit auch Verbraucher, die beispielsweise zur Manipulationssicherheit, insbesondere zum Diebstahlschutz, üblicherweise gerade bei abgestellten Kraftfahrzeugen eingeschaltet sein sollen.

Es ist Aufgabe der Erfindung, eine Schaltanordnung zur Reduzierung des Ruhestromverbrauchs eingangs genannter Art derart zu verbessern, daß zumindest ein elektrischer Diebstahlschutz wirksam bleibt und dabei eine weitere Optimierung der Reduzierung des Ruhestromverbrauchs vorgenommen wird. Diese Aufgabe wird durch die kennzeichnenden Merkmale des Patentanspruchs 1 gelöst.
Der elektrische Versorgungseingang einer elektrischen Diebstahlschutzvorrichtung, dessen elektrische Verbindungsleitung zur Spannungsversorgung vorzugsweise zwischen der Kraftfahrzeugbatterie und dem steuerbaren Schalter angeordnet ist, ist mit der Kraftfahrzeugbatterie untrennbar verbunden. Dadurch ist ein Diebstahlschutz gewährleistet und gleichzeitig der Ruhestromverbrauch aller anderen Bordnetzverbraucher durch einen einzigen zentralen steuerbaren Schalter auf ein Minimum reduzierbar. Dabei wird der steuerbare Schalter beispielsweise in Abhängigkeit von dem aus der Kraftfahrzeugbatterie fließenden Ruhestrom und/oder in Abhängigkeit von der Stellung eines manuell zu betätigenden Ruhestromverhinderungs-Schalters geöffnet.

Die elektrische Diebstahlschutzvorrichtung, die üblicherweise auch ein Steuergerät enthält, erhält ein der Stellung des steuerbaren Schalters entsprechendes Eingangssignal. Dieses Eingangssignal wird beispielsweise von einem Steuergerät zur Ansteuerung des steuerbaren Schalters an das Steuergerät der Diebstahlschutzvorrichtung übermittelt oder aus der Spannung gebildet, die an dem mit den abzutrennenden Verbrauchern verbundenen Pol des steuerbaren Schalters abgegriffen wird. Die elektrische Diebstahlschutzvorrichtung ist weiterhin mit mindestens einem manuell zu betätigenden Schalter zum Schärfen und zum Entschärfen der Diebstahlschutzvorrichtung verbunden. Die Stellung des manuell zu betätigenden Schalters wird von der elektrischen Diebstahlschutzvorrichtung insbesondere im geschärften Zustand abgefragt, wobei bei geöffnetem steuerbaren Schalter diese Abfrage weniger oft stattfindet als bei geschlossenem steuerbaren Schalter. Mit dieser erfindungsgemäßen Schaltanordnung wird der Ruhestromverbrauch noch weiter reduziert, indem der elektrische Versorgungsbedarf der elektrischen Diebstahlschutzvorrichtung, die noch mit der Kraftfahrzeugbatterie verbunden ist, ebenfalls reduziert wird.

Eine vorteilhafte Ausgestaltung der Erfindung ist der Gegenstand des Patentanspruchs 2.
Eine der Diebstahlschutzvorrichtung zugeordnete Betriebsanzeigelampe wird erfindungsgemäß derart angesteuert, daß sie bei geöffnetem steuerbaren Schalter weniger oft und/oder kürzer blinkt als bei geschlossenem steuerbaren Schalter. Diese erfindungsgemäße Maßnahme führt noch zu einer weiteren Reduzierung des elektrischen Versorgungsbedarfs der Diebstahlschutzvorrichtung und damit des Ruhestromverbrauchs. Darüber hinaus kann der Fahrer durch die Häufigkeit bzw. die Länge des Blinkimpulses der Betriebsanzeigelampe feststellen, ob der steuerbare Schalter geöffnet oder geschlossen ist bzw. ob die Trennung der Bordnetzverbraucher von der Kraftfahrzeugbatterie stattgefunden hat.

Eine weitere vorteilhafte Ausgestaltung der Erfindung ist der Gegenstand des Patentanspruchs 3.
Der geöffnete steuerbare Schalter wird wieder geschlossen, wenn der manuell zu betätigende Schalter zum Schärfen und Entschärfen der Diebstahlschutzvorrichtung in die Stellung zum Entschärfen gebracht wurde. Dabei kann beispielsweise die Diebstahlschutzvorrichtung selbst das Schließen dieses Schalters vornehmen, so daß ein eventuell vorhandenes Steuergerät zur Ansteuerung des steuerbaren Schalters bei geöffnetem steuerbaren Schalter ebenfalls von der Batterie getrennt werden kann. Auch mit dieser erfindungsgemäßen Weiterbildung wird eine Reduzierung des Ruhestromverbrauchs weiter verbessert. Eine weitere vorteilhafte Ausgestaltung der Erfindung ist der Gegenstand des Patentanspruchs 4.
Bei wieder geschlossenem Schalter wird erfindungsgemäß eine Warnung ausgelöst, die auf den vorher geöffneten steuerbaren Schalter hinweist. Diese Warnung kann beispielsweise akustisch, durch ein von der üblichen Blinkweise der Betriebsanzeigelampe abweichende Ansteuerung der Betriebsanzeigelampe oder durch eine optische Anzeige im Kombiinstrument vorgenommen werden. Bei einer optischen Anzeige im Kombiinstrument kann zudem eine weitergehende Information ausgegeben werden, die beispielsweise anzeigt, aus welchem Grund der steuerbare Schalter geöffnet wurde. Beispielsweise kann eine Aufforderung zum Aufsuchen einer Werkstatt ausgegeben werden, wenn der steuerbare Schalter durch einen extrem hohen Ruhestrom, der beispielsweise auf einen Kurzschluß hinweist, geöffnet wurde.

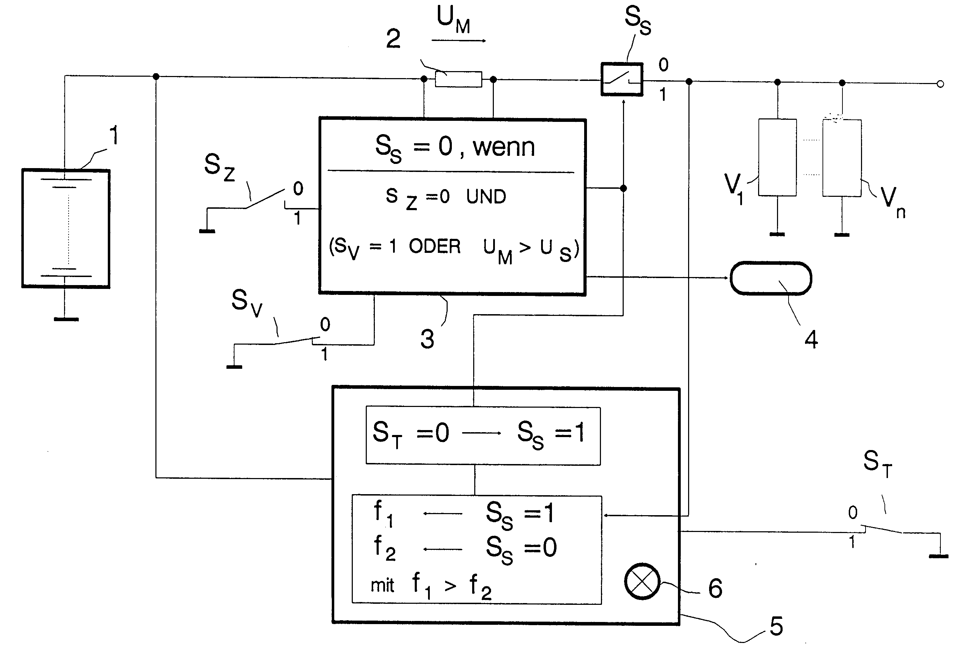

In der Zeichnung ist ein Ausführungsbeispiel der Erfindung dargestellt. Sie zeigt eine erfindungsgemäße Schaltanordnung mit einem Steuergerät zum Ansteuern des steuerbaren Schalters und einem Steuergerät einer elektrischen Diebstahlschutzvorrichtung.

Die Kraftfahrzeugbatterie, im folgenden Batterie 1 genannt, ist über einen Meßwiderstand 2 mit einem ersten Pol des steuerbaren Schalters Sₛ verbunden. Der zweite Pol des steuerbaren Schalters S_{S} ist an den Bordnetzverbrauchern V₁ bis Vₙ angeschlossen. Jeweils eine elektrische Leitung vor und nach dem Meßwiderstand 2 führen zu einem Steuergerät 3, das den steuerbaren Schalter Sₛ ansteuert. Durch diese beiden elektrischen Leitungen wird als erstes Eingangssignal dem Steuergerät 3 die Spannung U_{M} zugeführt, die an dem Meßwiderstand 2 abfällt. Insbesondere bei abgestelltem Kraftfahrzeug ist die Spannung U_{M} direkt proportional mit dem aus der Batterie 1 fließenden Ruhestrom. Das Steuergerät 3 erhält weiterhin Eingangssignale des Zündschloßschalters S_{Z} und des Vorwahlschalters S_{V}. Ein erstes Ausgangssignal des Steuergerätes 3 ist das Ansteuersignal zum Schließen oder öffnen des steuerbaren Schalters S_{S}. Die Stellung "0" des steuerbaren Schalters S_{S} entspricht dem geöffneten Zustand, die Stellung "1" entspricht dem geschlossenem Zustand des steuerbaren Schalters S_{S}. Ein zweites Ausgangssignal führt zu einer Warnanzeige 4, die beispielsweise im Kombiinstrument bei der Wieder-Inbetriebnahme des Kraftfahrzeuges den vorher geöffneten steuerbaren Schalter S_{S} bzw. die Trennung der Bordnetzverbraucher V₁ bis Vₙ von der Batterie 1 anzeigt.

Weiterhin ist die Batterie 1 mit dem Versorgungseingang der elektrischen Diebstahlschutzvorrichtung 5 verbunden. Darüber hinaus ist an einen weiteren Eingang der Diebstahlschutzvorrichtung 5 der Türschloßschalter S_{T} angeschlossen. Eine elektrische Leitung, die mit dem an den Bordnetzverbrauchern V₁ bis Vₙ angeschlossenen Pol des steuerbaren Schalters S_{S} verbunden ist, führt als dritte Eingangsleitung zur Diebstahlschutzvorrichtung 5. Über das Signal dieser dritten Eingangsleitung erkennt die Diebstahlschutzvorrichtung 5, ob der Schalter S_{S} in der Stellung "0", also offen, oder in der Stellung "1", also geschlossen ist. Liegen beispielsweise 0 Volt an dieser dritten elektrischen Eingangsleitung an, steht der steuerbare Schalter S_{S} in der Stellung "0", liegen jedoch 12 Volt an dieser dritten elektrischen Eingangsleitung an, so ist der steuerbare Schalter S_{S} in der Stellung "1". Ein Ausgang der Diebstahlschutzvorrichtung 5 ist zum Ansteuern des steuerbaren Schalters S_{S} mit diesem verbunden.

Das Steuergerät 3 zur Ansteuerung des steuerbaren Schalters Sₛ öffnet den Schalter, d.h. S_{S}=0, wenn der Zündschloßschalter S_{Z} geöffnet ist, d.h. S_{Z}=0, und wenn gleichzeitig entweder der Vorwahlschalter S_{V} geschlossen ist, d.h. S_{V}=1, oder die Spannung U_{M} größer als eine vorgegeben Spannungsschwelle U_{S} ist, d.h. U_{M}>U_{S}. Dabei ist der Vorwahlschalter S_{V} ein manuell zu betätigender Ruhestromverhinderungs-Schalter, den der Fahrer schließt, wenn ein längeres Abstellen des Kraftfahrzeuges vorgesehen ist. Das Öffnen dieses Vorwahlschalters S_{V} kann beispielsweise bei Inbetriebnahme des Kraftfahrzeuges automatisch oder willkürlich durch den Fahrer vorgenommen werden. Die vorgegebene Spannungsschwelle U_{S} entspricht einer vorgegebenen Ruhestromschwelle, die nicht überschritten werden darf, da anderenfalls eine zu schnelle Entladung der Batterie 1 stattfinden würde. Vorzugsweise wird bei Vorliegen der Bedingungen zum Öffnen des steuerbaren Schalters S_{S} der steuerbare Schalter S_{S} erst nach einer vorgegebenen Verzögerungszeit geöffnet, die ab dem Zeitpunkt gemessen wird, ab dem der Zündschloßschalter S_{Z} geöffnet wurde. Durch diese Verzögerungszeit werden automatisch ausgeführte abschließende Maßnahmen in den Bordnetzverbrauchern V₁ bis V_{N} gewährleistet.

Bei geöffnetem steuerbaren Schalter S_{S} im abgestellten Kraftfahrzeug wird die Diebstahlschutzvorrichtung 5 weiterhin durch die Batterie 1 elektrisch versorgt. Die Diebstahlschutzvorrichtung 5 fragt im geschärftem Zustand den Türschloßschalter S_{T}, der zum Entschärfen der Diebstahlschutzvorrichtung 5 beispielsweise geöffnet sein muß, d.h. S_{T}=0, vorzugsweise zyklisch ab. Ist der steuerbare Schalter S_{S} geschlossen, d.h. der vorhandene Ruhestrom ausreichend gering bzw. die Ladung der Batterie 1 ausreichend hoch, wird die zyklische Abfrage des Türschloßschalters S_{T} mit einer Frequenz f₁ durchgeführt. Ist der Schalter S_{S} geöffnet, d.h. die Batterie 1 soll durch möglichst gute Reduzierung des Ruhestromverbrauchs geschont werden, findet die zyklische Abfrage des Türschloßschalters S_{T} mit einer Frequenz f₂ statt, die wesentliche kleiner als die Frequenz f₁ ist. D.h. die Abfrage des Türschloßschalters S_{T} findet in größeren Zeitabständen statt, wenn der steuerbare Schalter Sₛ geöffnet ist. Vorzugsweise ist die Diebstahlschutzvorrichtung 5 mit einer Betriebsanzeigelampe 6 verbunden, die entsprechend der Abfragefrequenzen f₁ und f₂ blinkt. Dabei ist es möglich, bei einem Blinken der Betriebsanzeigelampe 6 mit einer der Frequenz f₂ entsprechenden Häufigkeit auch die Dauer des Aufleuchtens gegenüber der Dauer des Aufleuchtens bei einem Blinken mit der der Frequenz f1 entsprechenden Häufigkeit zu verkürzen.

Mit diesem erfindungsgemäßen Ausführungsbeispiel ist eine Möglichkeit dargestellt, den Ruhestromverbrauch bei abgestelltem Kraftfahrzeug mit einem einzigen zentralen steuerbaren Schalter trotz Aufrechterhaltung des Diebstahlschutzes auf ein Minimum zu reduzieren. Darüber hinaus wird gleichzeitig der Fahrer nach einem Trennen der Bordnetzverbraucher von der Kraftfahrzeugbatterie informiert, so daS er über damit verbundene Folgen nicht überrascht ist.

## Patentansprüche

1. Schaltanordnung zur Reduzierung des Ruhestromverbrauchs bei abgestellten Kraftfahrzeugen mit einem steuerbaren Schalter zur zentralen Trennung im wesentlichen aller Bordnetzverbraucher von der Kraftfahrzeugbatterie, wobei der elektrische Versorgungseingang einer elektrischen Diebstahlschutzvorrichtung (5) unter Umgehung des steuerbaren Schalters (S_{S}) mit der Kraftfahrzeugbatterie (1) untrennbar verbunden ist, dadurch gekennzeichnet, daß die elektrische Diebstahlschutzvorrichtung (5) ein der Stellung des steuerbaren Schalters (S_{S}) entsprechendes Eingangssignal erhält und die Stellung eines manuell zu betätigenden Schalters (S_{T}) zum Schärfen und Entschärfen der Diebstahlschutzvorrichtung (5) bei geöffnetem steuerbaren Schalter (S_{S}=0) weniger oft (f₂) abfragt als bei geschlossenem steuerbaren Schalter (S_{S}=1)`

2. Schaltanordnung nach Patentanspruch 1 dadurch gekennzeichnet, daß eine der Diebstahlschutzvorrichtung (5) zugeordnete Betriebsanzeigelampe (6) derart angesteuert wird, daß sie bei geöffnetem steuerbaren Schalter (S_{S}=0) weniger oft und/oder kürzer blinkt als bei geschlossenem steuerbaren Schalter (S_{S}=1).

3. Schaltanordnung nach einem der Patentansprüche 1 bis 2, dadurch gekennzeichnet, daß der geöffnete steuerbare Schalter (S_{S}=0) wieder geschlossen wird, wenn der manuell zu betätigende Schalter (S_{T}) zum Schärfen und Entschärfen der Diebstahlschutzvorrichtung (5) in die Stellung zum Entschärfen gebracht wurde.

4. Schaltanordnung nach einem der Patentansprüche 1 bis 3, dadurch gekennzeichnet, daß bei wieder geschlossenem steuerbaren Schalter (S_{S}=1) eine Warnvorrichtung (4) aktiviert wird, die auf den vorher geöffneten steuerbaren Schalter (S_{S}=0) hinweist.

## Claims

1. A switching arrangement for reducing the static current consumption of parked motor vehicles, comprising a controllable switch for centrally disconnecting substantially all on-board loads from the vehicle battery, wherein the electric supply input of an electric anti-theft device (5) is inseparably connected to the vehicle battery (1), bypassing the controllable switch (S_{S}), **characterised in that** the electric anti-theft device (5) receives an input signal corresponding to the position of the controllable switch (S_{S}) and interrogates the position of a manually actuated switch (S_{T}) for setting or deactivating the anti-theft device (5) less often (f₂) when the controllable switch is open (S_{S}=0) than when the controllable switch is closed (S_{S}=1).

2. A switching arrangement according to claim 1, **characterised in that** an equipment-on indicator lamp (6) associated with the anti-theft device (5) is actuated so that when the controllable switch is open (S_{S}=0) it flashes less often and/or more briefly than when the controllable switch is closed (S_{S}=1).

3. A switching arrangement according to claim 1 or 2, **characterised in that** the opened controllable switch (S_{S}=0) is re-closed when the manual switch (S_{T}) for focusing or deactivating the anti-theft device (5) is brought into the position for deactivation.

4. A switching arrangement according to any of claims 1 to 3, **characterised in that** when the controllable switch is re-closed (S_{S}=1) a monitor (4) is activated and indicates the controllable switch which was previously open (S_{S}=0).

## Revendications

1. Circuit pour réduire la consommation de courant de repos d'un véhicule à l'arrêt, comprenant un interrupteur commandé pour couper de manière centralisée pratiquement tous les utilisateurs du réseau embarqué de la batterie du véhicule, l'entrée d'alimentation électrique d'un dispositif électrique antivol (5) étant reliée de manière définitive à la batterie (1) du véhicule en contournant l'interrupteur commandé (S_{S}),
caractérisé en ce que
le dispositif antivol électrique (5) reçoit un signal d'entrée correspondant à la position de l'interrupteur commandé (S_{S}) et à la position d'un interrupteur (S_{T}) à commande manuelle, pour armer et désarmer le dispositif antivol (5) lorsque l'interrupteur commandé est ouvert (S_{S}=0) de manière à l'interroger moins fréquemment (f₂) que lorsque l'interrupteur commandé est fermé (S_{S}=1).

2. Circuit selon la revendication 1,
caractérisé en ce qu'
un voyant de fonctionnement (6), associé au dispositif antivol (5), est commandé pour clignoter moins souvent et/ou plus brièvement lorsque l'interrupteur commandé (S_{S}=0) est ouvert que lorsque l'interrupteur commandé (S_{S}=1) est fermé.

3. Circuit selon l'une des revendications 1 et 2,
caractérisé en ce que
l'interrupteur commandé ouvert (S_{S}=0) est de nouveau fermé lorsque l'interrupteur à commande manuelle (S_{T}) destiné à armer et désarmer le dispositif antivol (5), a été mis en position de désarmement.

4. Circuit selon l'une des revendications 1 à 3,
caractérisé en ce qu'
un dispositif d'avertissement (4) est activé lorsque l'interrupteur commandé (S_{S}=1) est de nouveau fermé, ce dispositif indiquant que l'interrupteur commandé (S_{S}=0) était précédemment ouvert.
